# EUROPÄISCHE PATENTSCHRIFT

(11) **EP 3 405 399 B1**
(45) Veröffentlichungstag und Bekanntmachung des Hinweises auf die Patenterteilung: **31.03.2021**
(21) Anmeldenummer: 17700399.3
(22) Anmeldetag: 10.01.2017
(51) Int. Cl.: B65B 31/02, B29C 33/00, B29C 51/36, B29C 51/42, B65B 47/10, B65B 9/04, B65B 11/52

(54) **SIEGELWERKZEUG, VERPACKUNGMACHINE UND VERFAHREN ZUR HERSTELLUNG EINE SKINVERPACKUNG**
SEALING TOOL, PACKAGING MACHINE AND METHOD FOR PRODUCING A SKIN PACKAGING
OUTIL DE SCELLAGE POUR UN EMBALLAGE PELLIPLAQUÉ

(30) Priorität: 20.01.2016 DE 102016200673
(43) Veröffentlichungstag der Anmeldung: 28.11.2018
(73) Patentinhaber: GEA Food Solutions Germany GmbH, 35216 Biedenkopf-Wallau (DE)
(72) Erfinder: PAUL, Reiner, 35239 Steffenberg (DE)
(74) Vertreter: Kutzenberger Wolff & Partner
(86) Internationale Anmeldenummer: PCT/EP2017/050396
(87) Internationale Veröffentlichungsnummer: WO 2017/125282

(56) Entgegenhaltungen:
- EP-A1- 2 285 706
- EP-A1- 2 285 706
- EP-A1- 2 815 983
- EP-A2- 2 251 265
- EP-A2- 2 722 281
- EP-A2- 2 722 281
- EP-A2- 2 722 281
- US-A- 4 621 483

## Beschreibung

Die vorliegende Erfindung betrifft ein Siegeloberwerkzeug, das einen Randbereich und eine Einbuchtung aufweist, mit der die Oberfolienbahn geformt wird, wobei die Einbuchtung einen Übergangsbereich und einen Innenbereich aufweist wobei sich der Übergangsbereich zwischen dem Randbereich und dem Innenbereich befindet.

Bei Skinverpackungen liegt die Oberfolienbahn direkt an dem Verpackungsgut an, folgt zumindest teilweise dessen Kontur und ist großflächig mit der Verpackungsmulde, auf der sich das Verpackungsgut befindet, verbunden. Ein Siegeloberwerkzeug für Skinverpackungen wird z.B. in EP 2 722 281 A2 beschrieben. Oftmals weist die Oberfolie dabei aber Falten auf und/oder die Verpackungsmaschinen sind aufwändig gestaltet, weil die Oberfolienbahn vorgeheizt, vorgereckt/vorverformt und/oder geführt werden muss.

Es war deshalb die Aufgabe der vorliegenden Erfindung ein Siegeloberwerkzeug zur Verfügung zu stellen, mit dem die Nachteile des Standes der Technik überwunden werden können.

Gelöst wird die Aufgabe mit einem Siegeloberwerkzeug gemäß Anspruch 1.

Die vorliegende Erfindung betrifft ein Siegeloberwerkzeug, das einen Randbereich und eine Einbuchtung aufweist, in die eine Oberfolie hineingesaugt und dabei geformt wird. Im Randbereich und/oder vorzugsweise durch ein umgebendes Gehäuse / Klemmwerkzeug wird die Oberfolie beim Verformen vorzugsweise fixiert und der Randbereich und/oder das umgebende Gehäuse / Klemmwerkzeug dichtet den Raum zwischen der Einbuchtung und der Oberfolie vorzugsweise ab. Vorzugsweise ist das erfindungsgemäße Siegeloberwerkzeug erwärmt. Beim Verformen legt sich die ursprünglich plane Folienbahn an die Kontur der Einbuchtung an und wird dabei, insbesondere durch Wärmeleitung, erwärmt. Vorzugsweise ist der Randbereich plan vorgesehen. An den inneren Umfang des Randbereichs schließt sich die Einbuchtung an, die einen Übergangsbereich und einen Innenbereich aufweist. Vorzugsweise ist der Innenbereich zumindest abschnittsweise im Wesentlichen plan und besonders bevorzugt parallel zu dem Randbereich gestaltet. Der Übergangsbereich ist zwischen dem Randbereich und dem Innenbereich vorgesehen. Der Randbereich und der Übergangsbereich gehen vorzugsweise ohne Knick ineinander über, um in diesem Bereich eine vorzugsweise gleichmäßige Dehnung, insbesondere keine Überdehnung der Oberfolie zu erreichen. Vorzugsweise weist das Siegeloberwerkzeug insbesondere im Bereich der Einbuchtung eine Vielzahl von Bohrungen auf und/oder ist aus einem porösen Material gefertigt, so dass es gasdurchlässig ist und durch das Siegeloberwerkzeug hindurch zwischen der Einbuchtung und der Oberfolie ein Unterdruck erzeugt werden kann, der die Oberfolie in die Einbuchtung hineinzieht und dabei formt und besonders bevorzugt erwärmt. Die Einbuchtung weist eine gewisse Tiefe auf, die sich aus der Differenz zwischen dem Randbereich und dem Innenbereich errechnet.

Erfindungsgemäß weist der Übergangsbereich nun einen ersten und einen zweiten Abschnitt auf, wobei ein Abschnitt konvex und der andere Abschnitt konkav vorgesehen ist. Die Abschnitte erstecken sich vorzugsweise in Ebenen parallel zu dem Rand- und/oder dem Innenbereich. Der erste, vorzugsweise konvexe Abschnitt schließt sich an den Randbereich und der zweite, vorzugsweise konkave Abschnitt schließt sich an den Innenbereich an. Erfindungsgemäß beträgt das Verhältnis der Tiefe der Einbuchtung zu dem Krümmungsradius des ersten Abschnitts und vorzugsweise auch zu dem Krümmungsradius des zweiten Abschnitts zumindest abschnittsweise ≤ 2,5, bevorzugt ≤ 2 und noch mehr bevorzugt ≤ 1. Vorzugsweise beträgt die Untergrenze ≥ 0,1, besonders bevorzugt ≥ 0,2, noch mehr bevorzugt ≥ 0,3 und am meisten bevorzugt ≥ 0.5.

Durch das erfindungsgemäße Siegeloberwerkzeug ist es möglich Skinverpackungen mit einer wesentlich einfacheren Verpackungsmaschine zur Verfügung zu stellen, die keiner Vorreckung/Vorverformung und/oder Vorheizung der Oberfolie bedarf. Es ist demnach möglich die nicht erwärmte, plane Oberfolie in dem erfindungsgemäßen Siegeloberwerkzeug zu verformen. Dabei erfolgt das Recken und/oder Verformen der Oberfolie wesentlich gleichmäßiger als bei Siegeloberwerkzeugen des Standes der Technik. Die Oberfolie legt sich vollflächig an die Einbuchtung des Siegeloberwerkzeugs an und wird dadurch gleichmäßig erwärmt. Dadurch, dass die Oberfolie nicht vorgeheizt oder vorgereckt wird, ist der Energiebedarf bei der Herstellung einer Skinverpackung vergleichsweise gering. Mit dem erfindungsgemäßen Siegeloberwerkzeug ist es möglich in die kalte, nicht erwärmte Oberfolie einen Dom mit einer Tiefe von bis zu 50 mm, vorzugsweise bis zu 80 mm, besonders bevorzugt bis zu 100 mm zu formen, ohne dass die Oberfolie reißt oder lokal überdehnt wird. Eine Führung der Oberfolie, beispielsweise mit seitlichen Ketten kann durch das erfindungsgemäße Siegeloberwerkzeug entfallen. Eine konventionelle Verpackungsmaschine kann mit dem erfindungsgemäßen Siegeloberwerkzeug auf einfache Weise in eine "Skinverpackungsmaschine" umgerüstet werden, indem das konventionelle Siegeloberwerkzeug durch das erfindungsgemäße Siegeloberwerkzeug ersetzt wird.

Der Umbau wird durch vorzugsweise durch modulare Bauweise der Siegeloberwerkzeuge ermöglicht und geschieht vorzugsweise im Sinne eines schnellen Werkzeugwechsels, beispielsweise unter Verwendung eines Werkzeugaufbaus wie er in der WO 2013127963 A1 von der hiesigen Anmelderin, bei dem das Oberwerkzeug auf der Verpackungsmaschine verbleibt und nur der Werkzeugeinsatz darin, also das Siegeloberwerkzeug gewechselt wird, beschreiben ist. Das erfindungsgemäße Siegeloberwerkzeug kann folglich bei vorhandenen Verpackungsmaschinen nachgerüstet werden. Der Fachmann versteht, dass das Siegeloberwerkzeug in diesem Fall ein Werkzeug für Skin-Verpackungen oder ein herkömmliches Werkzeug beispielsweise für sogenannte "modified atmosphere packagings" (MAP) oder Vakuumpackungen oder einfache Packungen ohne geänderte Atmosphäre sein kann und dem Verwender der Verpackungsmaschine das Verpackungen unterschiedlicher Produkte mit unterschiedlichen Anwendungen erlaubt. Jedes dieser Werkzeuge kann problemlos in die Verpackungsmaschine eingebaut werden, so dass diese Vielfältig einsetzbar ist.

Bevorzugt ist eine Ausführungsform der Erfindung mit einer Siegelstation einer Verpackungsmaschine, in der mehrere, mindestens zwei Siegeloberwerkzeuge, jeweils mit einer Einbuchtung vorgesehen sind, wobei sich die Einbuchtungen in mindestens einer Abmessung unterscheiden.

Mit so ausgestatteten Verpackungsmaschinen können eine oder mehrere Verpackung(en) in einem Arbeitsgang hergestellt werden, wobei Produkte mit unterschiedlichen Abmessungen vorgesehen sein können und dazu jeweils die passenden Siegelwerkzeuge mit unterschiedlichen Tiefen kombiniert werden.

Vorzugsweise sind die Siegeloberwerkzeuge beliebig miteinander kombinierbar und / oder wechselbar.

Eine weitere bevorzugte Ausführungsform der vorliegenden Erfindung betrifft ein Siegeloberwerkzeug, bei dem der Übergangsbereich einen ersten und einen zweiten Abschnitt aufweist, wobei ein Abschnitt konvex und der andere Abschnitt konkav vorgesehen ist, deren Krümmungsradius jeweils zumindest abschnittsweise ≥ 8 mm, vorzugsweise ≥ 15 mm und noch mehr bevorzugt ≥ 20 mm und am meisten bevorzugt ≥ 30 mm beträgt.

Vorzugsweise ist der Krümmungsradius jedoch ≤ 160 mm, besonders bevorzugt ≤ 120 mm, noch mehr bevorzugt ≤ 80 mm und noch mehr bevorzugt ≤ 60 mm.

Die Innenkontur des erfindungsgemäßen Siegeloberwerkzeugs ist anders gestaltet als der folienberührende Bereich der Innenkontur eines Unterwerkzeugs, das beispielsweise in der Formstation einer Verpackungsmaschine eingesetzt wird. Gemäß dem Stand der Technik wurde bisher die Kontur der Einbuchtung des Siegeloberwerkzeugs einer Skinverpackungsmaschine im Wesentlichen gleich gestaltet wie die Kontur des Siegelunterwerkzeugs der Siegelstation und / oder des formgebenden Unterwerkzeugs der Formstation. Dies ist jedoch bei dem erfindungsgemäßen Obersiegelwerkzeug anders. Vorzugsweise ist die Einbuchtung des Siegeloberwerkzeugs umlaufend schmäler gestaltet als das Siegelunterwerkzeug der Siegel- und / oder des formgebenden Unterwerkzeugs der Formstation und wird besonders bevorzugt sehr nah bis an das Produkt herangeführt, wobei eine Berührung aber vermieden werden sollte. Dadurch ist es möglich den ersten Abschnitt des Übergangsbereichs, der sich an die Innenkontur des Randbereichs anschließt, vorzugsweise mit einem großen Krümmungsradius zu gestalten, der vorzugsweise ≥ 1,3, besonders bevorzugt ≥ 2,0, noch mehr bevorzugt ≥ 3,0 oder am meisten bevorzugt ≥ 5,0 mal größer ist als die Krümmungsradien, die der Stand der Technik vorgeschlagen hat. Das typische mögliche Reißen der nicht vorgewärmten Oberfolie oder ein Überdehnen der Oberfolie, das zu Faltenbildung führt, entfällt. Zudem neigt die Oberfolie durch das Formen einer zumindest abschnittweise nahe an der Produktform angelehnten Kontur anschließend weniger zu Faltenbildung am Produkt, was sich positiv auf das qualitative Erscheinungsbild der Verpackung und die Dichtigkeit der Siegelung auswirkt.

Vorzugsweise sind der erste und/oder der zweite Abschnitt als umlaufende Fläche vorgesehen. Gemäß einer anderen bevorzugten Ausführungsform sind bei einer Einbuchtung mit einer rechteckigen Grundfläche nur die langen Seiten und/oder nur die Ecken mit dem erfindungsgemäßen Verhältnis von Tiefe zu Krümmungsradius und/oder mit dem erfindungsgemäßen Krümmungsradius versehen.

Vorzugsweise ist der Übergangsbereich der Einbuchtung so gestaltet, dass die Radien der beiden Abschnitte ineinander übergehen, wobei am Treffpunkt bzw. der Trefflinie der beiden Abschnitte auch eine Einbuchtung, beispielsweise einen Knick vorhanden sein kann. Vorzugsweise spannen die beiden Flanken des Knicks einen Winkel < 180° und ≥ 30° besonders bevorzugt ≥ 35° auf. Der Übergangsbereich weist dann zumindest lokal, vorzugsweise aber entlang des gesamten Umfangs der Einbuchtung keinen geraden, nicht gekrümmten Abschnitt auf.

Vorzugsweise sind bei einer Einbuchtung mit einer rechteckigen Grundfläche auch die Eckbereiche, die zwei rechtwinklig vorgesehene Übergangsbereichsflächen miteinander verbinden ebenfalls mit einem Krümmungsradius von ≥ 10 mm, vorzugsweise ≥ 20 mm und noch mehr bevorzugt ≥ 40 mm und am meisten bevorzugt ≥ 60 mm gestaltet. Der Fachmann versteht, dass sich in diesen Eckbereichen der Krümmungsradius mit der Höhe der Verpackungsmulde verändert, wenn die Übergangsflächen nicht rechtwinklig zu dem Innenbereich vorgesehen sind. Die oben gemachten Angaben beziehen sich dabei auf den Krümmungsradius im ersten konvexen Abschnitt des Übergangsbereichs.

Gemäß einer bevorzugten Ausführungsform der vorliegenden Erfindung ist der konvexe Krümmungsradius kleiner als der konkave Krümmungsradius.

Vorzugsweise ist das Siegeloberwerkzeug zumindest abschnittsweise mit Ausnehmungen versehen und/oder aus einem porösen Material gearbeitet. Dabei sind die Ausnehmungen bzw. das poröse Material insbesondere im Bereich der Einbuchtung vorzusehen, damit das Siegeloberwerkzeug zumindest in diesem Bereich gasdurchlässig ist, so dass zwischen der Einbuchtung und der Oberfolie ein Unterdruck angelegt werden kann, der die Oberfolie in die Einbuchtung hineinzieht und/oder durch die der Bereich zwischen der Einbuchtung und der Oberfolie belüftet und/oder mit einem Überdruck versehen werden kann.

Vorzugsweise beträgt die Tiefe der Einbuchtung mehr als 30 mm, vorzugsweise mehr als 40 mm und besonders bevorzugt 50 - 70 mm.

Ein weiterer Gegenstand der hilfreich zum Verständnis der vorliegenden Erfindung ist, ist eine Verpackungsmaschine, die eine Verpackungsmulde mit einer Einbuchtung mit einem größten Querschnitt zur Verfügung stellt, die in einer Füllstation mit einem Verpackungsgut befüllt wird und die eine Siegelstation aufweist, in der das Verpackungsgut mit einer Oberfolie zumindest im Wesentlichen formschlüssig umschlossen wird, wobei die Siegelstation ein Siegeloberwerkzeug mit einer Einbuchtung mit einem größten Querschnitt aufweist, die die Oberfolie erwärmt und formt, wobei der größte Querschnitt der Einbuchtung kleiner ist als der größte Querschnitt der Einbuchtung der Verpackungsmulde.

Dies betrifft eine Verpackungsmaschine bei der eine Verpackungsmulde zur Verfügung gestellt wird. Dies kann durch Einformen der Verpackungsmulde in eine plane Folienbahn oder durch Bereitstellen einer vorgefertigten Verpackungsmulde geschehen. Bei der Verpackungsmaschine kann es sich folglich beispielsweise um einen sogenannten Thermoformer aber auch um einen sogenannten Traysealer handeln. Diese Verpackungsmulde weist einen größten Querschnitt auf, der sich oftmals am oberen Ende der Verpackungsmulde befindet. In der Regel ist es der Querschnitt, durch den die Verpackungsmulde befüllt wird bzw. der sich in der Siegelebene der Verpackungsmulde befindet und der sich gegenüberliegend von dem Boden der Verpackungsmulde befindet. In einem nächsten Schritt wird diese Verpackungsmulde mit einem Verpackungsgut, insbesondere einem Lebensmittel, vorzugsweise einem proteinhaltigen Lebensmittel, befüllt. Dabei kann das Verpackungsgut über den oberen Rand der Verpackungsmulde hinausstehen. Erfindungsgemäß weist die Verpackungsmaschine eine Siegelstation auf, in der das Verpackungsgut zumindest im Wesentlichen formschlüssig mit einer Oberfolie umschlossen wird. Verpackungen, bei denen das Verpackungsgut in einer vergleichsweise steifen Verpackungsmulde vorgesehen ist und bei der das Verpackungsgut im Wesentlichen formschlüssig von einer Oberfolie umschlossen ist, bezeichnet der Fachmann als sogenannte Skinverpackung. Dabei verbindet sich die Oberfolie vorzugsweise großflächig, besonders bevorzugt sehr großflächig mit der Verpackungsmulde, insbesondere mit der gesamten der Oberfolie zugewandten Oberfläche der Verpackungsmulde, die nicht von dem Verpackungsgut überdeckt wird.

Die Siegelstation weist ein Siegeloberwerkzeug mit einer Einbuchtung mit einem maximalen Querschnitt auf. Dieser Querschnitt befindet sich in der Regel in der Ebene, die der Randbereich des Siegeloberwerkzeugs aufspannt. Dieses Werkzeug befindet sich oberhalb der Verpackungsmulde und innerhalb der Siegelstation auch oberhalb der Oberfolie. In diese Einbuchtung wird die Oberfolie hineingezogen und legt sich dabei an die innere Oberfläche der Einbuchtung an und wird dabei plastisch und/oder elastisch geformt. Da das Siegeloberwerkzeug vorzugsweise beheizt ist, wird die Oberfolie im Wesentlichen durch Wärmeleitung erwärmt. Gegebenenfalls erfolgt eine geringe Erwärmung auch durch Strahlungswärme, die von dem Siegeloberwerkzeug ausgeht.

Dabei kann vorgesehen sein, dass der größte Querschnitt der Einbuchtung kleiner ist als der größte Querschnitt der Einbuchtung der Verpackungsmulde. Dadurch wird in die Oberfolie ein Dom mit einem vergleichsweise kleinen maximalen Querschnitt geformt und/oder es ist möglich den Übergangsbereich, insbesondere dessen ersten Abschnitt mit einem vergleichsweise großen Krümmungsradius zu versehen, wodurch es möglich ist eine kalte Oberfolie zu formen und/oder einen sehr guten Umschluss des Verpackungsgutes bzw. anliegen an der Verpackungsmulde zu erzielen, ohne das sich nennenswerte Falten bilden.

Gemäß einem weiteren Gegenstand entspricht der Innendurchmesser der Einbuchtung im Wesentlichen der größten Abmessung des Querschnitts des Verpackungsgutes.

Dabei sollte die Einbuchtung das Verpackungsgut nicht berühren, aber dessen Kontur insbesondere dessen, insbesondere vertikalen, Umfang möglichst genau folgen. Vorzugsweise sollte der Abstand zwischen der Einbuchtung und dem äußeren Umfang des Verpackungsgutes 2 - 30 mm, besonders bevorzugt 4 - 15 und am meisten bevorzugt 4 - 6 mm betragen.

Noch ein weiterer Gegenstand ist eine Verpackungsmaschine, bei der die Oberfolie geformt wird, die aber keine Vorheizung und/oder keine Vorreckung/Vorformung der Oberfolie aufweist und/oder die keine seitliche Führung der Oberfolie aufweist.

Die Verpackungsmaschine zur Herstellung von sogenannten Skinverpackungen ist vergleichsweise einfach ausgeführt und vergleichsweise energieeffizient, weil auf eine Vorheizung und/oder Vorreckung/Vorformung der Oberfolie verzichtet werden kann. Zumindest beim Beginn des Verformens der Oberfolie ist diese plan und vorzugsweise nicht durch eine stromaufwärtige Heizung erwärmt. Beim Stand der Technik wird eine derartige Vorheizung bzw. Vorreckung stromaufwärts von der Siegelstation vorgesehen. Das erfindungsgemäße Siegeloberwerkzeug ist aber Teil der Siegelstation.

Noch ein bevorzugter Gegenstand der vorliegenden Erfindung ist deshalb eine Verpackungsmaschine, die das erfindungsgemäße Siegeloberwerkzeug aufweist.

Vorzugsweise weist die Siegelstation ein Siegeloberwerkzeug, beispielsweise einen Siegelrahmen auf, der zusätzlich nach und/oder während des Skin-Siegelns eine sich entlang des gesamten Umfangs der Verpackungsmulde erstreckende Siegelnaht zwischen der Oberfolie und der Verpackungsmulde vorsieht. Damit wird mindestens sichergestellt, dass die Oberfolie mit der Verpackungsmulde umlaufend an jeder Stelle dicht verbunden ist und auch vorhandene Falten zumindest im Bereich der Siegelnaht quasi glattgebügelt sind und nicht zu Undichtigkeiten führen können. Auch sieht die Verpackung danach häufig optisch ansprechender aus.

Noch ein Gegenstand hilfreich zum Verständnis der der vorliegenden Erfindung ist ein Verfahren zur Herstellung einer Skinverpackung, bei dem eine kalte und/oder nicht vorgeheizte und/oder plane Oberfolienbahn in die Einbuchtung eines Siegeloberwerkzeugs gezogen und dabei geformt und erwärmt wird und anschließend in Richtung einer mit einem Verpackungsgut gefüllten Verpackungsmulde gedrückt wird und dabei das Verpackungsgut umschließt und sich großflächig mit der Verpackungsmulde verbindet. Bei diesem erfindungsgemäßen Verfahren kann die Verpackungsmulde auch plan oder im Wesentlichen plan, d.h. nicht tiefgezogen sein.

Mit dem Verfahren wird eine Skinverpackung hergestellt, d.h. eine Verpackung, bei der die Oberfolie das Verpackungsgut eng umschließt und sich großflächig mit der Verpackungsmulde verbindet. Großflächig im Sinne der Erfindung bedeutet, dass die Siegelnahtfläche größer ist als bei der Siegelung mit einem Siegelrahmen.

Die Oberfolie wird vor dessen Verformung in einem Siegeloberwerkzeug nicht erwärmt, sondern weist Umgebungstemperatur auf. Des Weiteren wird die Oberfolie stromaufwärts von dem Siegelwerkzeug bezogen auf deren Bewegungsrichtung nicht vorgeformt, sondern ist plan. Erst in dem Siegeloberwerkzeug erfolgen zunächst eine Verformung und dann eine vollflächige Erwärmung des Abschnitts der Oberfolie, die Teil der resultierenden Verpackung wird. Zur Verformung wird zwischen dem Siegeloberwerkzeug und der Oberfolie ein Unterdruck erzeugt, der die Oberfolie in Richtung der Einbuchtung des Siegeloberwerkzeugs zieht.

Vorzugsweise wird vor dem Anlegen des Unterdrucks, der die Oberfolie in die Einbuchtung zieht, eine gewisse Wartezeit vorgesehen.

Während und/oder nachdem die Oberfolie in dem Siegeloberwerkzeug geformt worden ist, wird zwischen der Oberfolie und der Verpackungsmulde sowie vorzugsweise auch unterhalb der Verpackungsmulde ein Unterdruck erzeugt. Sobald oder nachdem die Oberfolie in der Einbuchtung geformt worden ist, wird der Unterdruck oberhalb der Oberfolie abgebaut und durch den Unterdruck unterhalb der Oberfolie wird diese in Richtung des Verpackungsgut gezogen und umschließt dieses zu mindestens teilweise formschlüssig. Da die Oberfolie in der Einbuchtung des Siegeloberwerkzeugs erwärmt worden ist, verbindet sie sich großflächig sowie stoffschlüssig mit der Verpackungsmulde, vorzugsweise entlang der gesamten der Oberfolie zugewandten Fläche der Verpackungsmulde, die nicht von dem Verpackungsgut bedeckt ist. Diese Siegelung ist vorzugsweise peelfähig.

Vorzugsweise wird zusätzlich eine Siegelung zwischen der Oberfolie und der Verpackungsmulde mit einem Siegelrahmen und/oder dem Siegeloberwerkzeug durchgeführt. Diese Siegelung erstreckt sich vorzugsweise entlang einer horizontalen Fläche entlang des Randes der Verpackung. Diese Siegelung kann peelfähig sein.

Im Folgenden wird die Erfindung anhand der Figuren 1 - 6 erläutert. Diese Erläuterungen sind lediglich beispielhaft und schränken den allgemeinen Erfindungsgedanken nicht ein. Diese Erläuterungen gelten für alle erfindungsgemäßen Gegenstände der vorliegenden Erfindung gleichermaßen.
- **Figur 1**: zeigt die erfindungsgemäße Verpackungsmaschine.
- **Figur 2**: zeigt das Skin-Verpackungsverfahren.
- **Figuren 3 - 6**: zeigen das erfindungsgemäße Siegeloberwerkzeug.

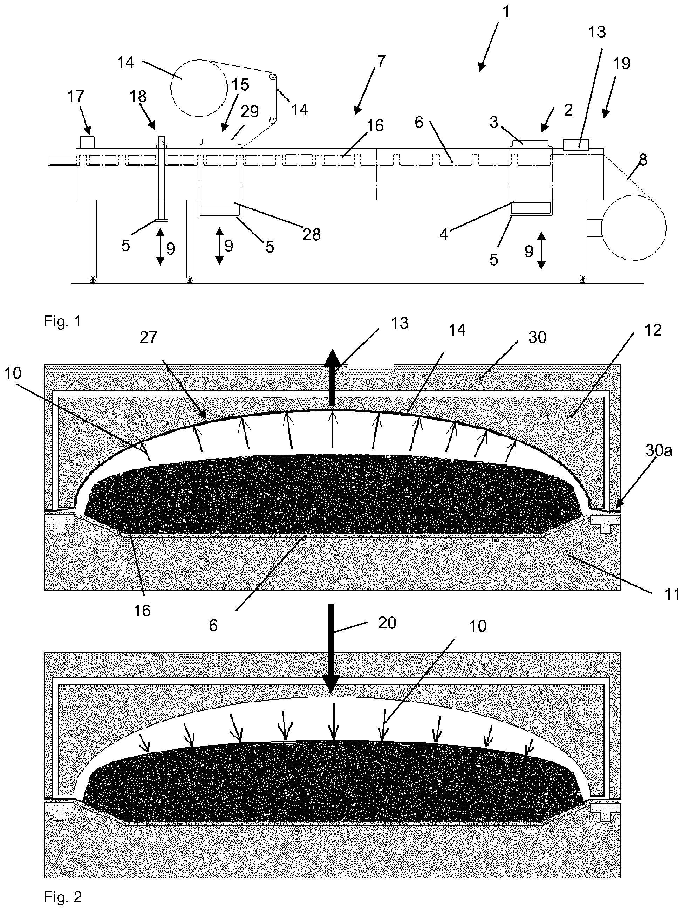

Figur 1 zeigt eine Ausführungsform der erfindungsgemäßen Verpackungsmaschine 1, die hier eine Tiefziehstation 2, eine Füllstation 7 sowie eine Siegelstation 15 aufweist. Eine Warenbahn 8, hier eine Kunststofffolienbahn 8, die sogenannte Unterbahn, wird von einer Vorratsrolle abgezogen und, vorzugsweise taktweise, entlang der erfindungsgemäßen Verpackungsmaschine von rechts nach links transportiert. Bei einem Takt wird die Warenbahn 8 um eine Formatlänge weitertransportiert. Dafür weist die Verpackungsmaschine zwei Transportmittel, in dem vorliegenden Fall jeweils zwei Endlosketten, auf, die rechts und links von der Folienbahn angeordnet sind. Sowohl am Anfang als auch am Ende der Verpackungsmaschine ist für jede Kette jeweils mindestens ein Zahnrad vorgesehen, um das die jeweilige Kette umgelenkt wird. Mindestens eines dieser Zahnräder ist angetrieben. Die Zahnräder im Einlaufbereich 19 und/oder im Auslaufbereich können miteinander, vorzugsweise durch eine starre Achse, verbunden sein. Jedes Transportmittel weist üblicherweise eine Vielzahl von Klemmmitteln auf, die die Warenbahn 8 im Einlaufbereich 19 klemmend ergreifen und die Bewegung des Transportmittels auf die Unterfolie 8 übertragen. Im Auslaufbereich der Verpackungsmaschine wird die klemmende Verbindung zwischen dem Transportmittel und der Warenbahn 8 wieder gelöst. In der Tiefziehstation 2, die über ein Oberwerkzeug 3 und ein Unterwerkzeug 4 verfügt, das die Form der herzustellenden Verpackungsmulde aufweist, werden die Verpackungsmulden 6 in die Folienbahn 8 eingeformt. Das Unterwerkzeug 4 ist auf einem Hubtisch 5 angeordnet, der, wie durch den Doppelpfeil symbolisiert wird, vertikal verstellbar ist. Vor jedem Folienvorschub wird das Unterwerkzeug 4 abgesenkt und danach wieder angehoben. Im weiteren Verlauf der Verpackungsmaschine werden die Verpackungsmulden dann in der Füllstation 7 mit dem Verpackungsgut 16 befüllt. In der sich daran anschließenden Siegelstation 19, die ebenfalls aus einem Oberwerkzeug 29 und einem vertikal verstellbaren Unterwerkzeug 28 besteht, wird eine Oberfolie 14 stoffschlüssig, durch Siegeln an der Warenbahn 8 befestigt. Auch in der Siegelstation werden das Oberwerkzeug und/oder das Unterwerkzeug vor und nach jedem Folientransport abgesenkt bzw. angehoben. Vor dem Siegeln der Oberfolie 14 an die Unterfolie 8 wird in der befüllten Verpackungsmulde ein gewisser Unterdruck erzeugt, mit dem in dem vorliegenden Fall, die Oberfolie auf die Verpackungsmulde gezogen wird. Im weiteren Verlauf der Verpackungsmaschine werden die fertiggestellten Verpackungen vereinzelt, was in dem vorliegenden Fall mit dem Querschneider 18 und dem Längsschneider 17 erfolgt. Der Querschneider 18 ist in dem vorliegenden Fall ebenfalls mit einer Hubeinrichtung 9 anhebbar bzw. absenkbar.

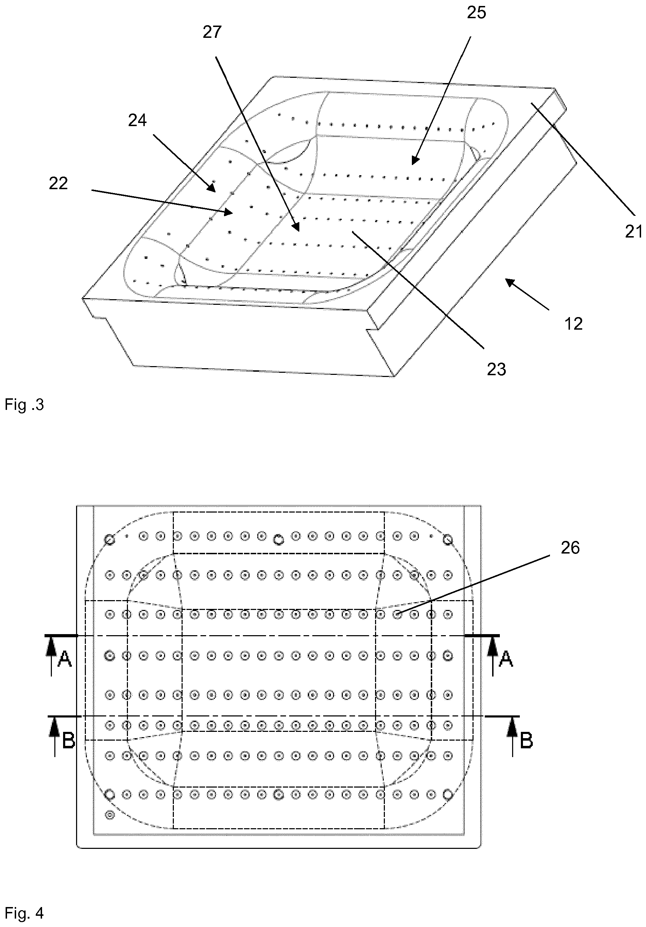

Mit dem Siegeloberwerkzeug 12, das das formgebende und vorzugsweise wechselbare Werkzeug innerhalb des Oberwerkzeugs 29 darstellt, das eine Einbuchtung 27 aufweist (siehe Figuren 3 - 6) wird in die plane Oberfolie ein Dom eingeformt. Dafür liegt an dem Siegeloberwerkzeug ein Unterdruck zwischen dem Werkzeug und der Oberfolie an, das die Oberfolie an das Werkzeug anlegt und/oder in die Einbuchtung 27 des Siegeloberwerkzeugs zieht. Des Weiteren ist das Siegeloberwerkzeug zumindest abschnittsweise beheizt. Sobald die vorher nicht erwärmte Oberfolie in Kontakt mit dem Siegeloberwerkzeug gelangt, wird diese auf die gewünschte Temperatur erwärmt, was deren Verformung und das spätere Siegeln an die Verpackungsmulde begünstigt.

Anhand von Figur 1 ist zu erkennen, dass die Oberfolie 14 vor deren Eintritt in die Siegelstation 15 weder beheizt noch vorgeformt wird. Außerdem ist die Oberfolie auch nicht im Bereich der Siegelstation oder stromaufwärts davon geführt.

Figur 2 zeigt die Vorgänge in der Siegelstation. Sobald sich die Verpackungsmulde 6 und die Oberfolie 14 in der Siegelstation befinden, werden das Oberwerkzeug 29 und das Unterwerkzeug 28 zusammengefahren und in ihrem Randbereich 30a abgedichtet sowie die Oberfolie und die Verpackungsmulde geklemmt. Sodann wird, wie durch den Pfeil 13 symbolisiert, ein Unterdruck zwischen dem Siegeloberwerkzeug 12 und der Oberfolie angelegt, der die Oberfolie in Richtung des Siegeloberwerkzeugs zieht, was durch die Pfeile 10 symbolisiert ist, so dass sich die Oberfolie an das Siegeloberwerkzeug sukzessive anlegt. Das beheizte Siegeloberwerkzeug überträgt seine Wärme dabei auf die bis dahin nicht, allenfalls durch Strahlungswärme in der Siegelstation, aufgeheizte Oberfolie. Während oder nach dem Formen der Oberfolie wird in dem Raum zwischen der Oberfolie 14 und dem Verpackungsgut 16 ein Unterdruck erzeugt, der vorzugsweise dem Unterdruck oberhalb der Oberfolie entspricht. Sobald die Oberfolie hinreichend erwärmt bzw. geformt ist oder nach einer zusätzlichen Wartezeit, wird der Raum oberhalb der Oberfolie belüftet oder sogar beispielsweise mit Pressluft ein Überdruck erzeugt, so dass dort zumindest nach einer vergleichsweise kurzen Zeit mindestens Umgebungsdruckt herrscht. Durch die damit vorhandene Druckdifferenz wird die Oberfolie auf das Verpackungsgut und die freie Fläche der Verpackungsmulde gedrückt, was in der unteren Abbildung dargestellt ist. Die erwärmte Oberfolie 14 umschließt das Verpackungsgut formschlüssig und verbindet sich stoffschlüssig mit der freien Fläche der Verpackungsmulde. Der Fachmann wird bei einem Vergleich der hiesigen Abbildungen mit den Figuren 3 - 6 erkennen, dass es sich bei dem hier dargestellten Werkzeug um ein Werkzeug gemäß dem Stand der Technik handelt, weil der Übergangsbereich der Einbuchtung 27 keinen konvexen Abschnitt aufweist und/oder weil der größte Querschnitt der Einbuchtung im Wesentlichen dem größten Querschnitt der Verpackungsmulde entspricht und/oder weil der Übergang zwischen dem Randbereich des Siegeloberwerkzeugs zu dem Übergansbereich der Einbuchtung scharfkantig vorgesehen ist.

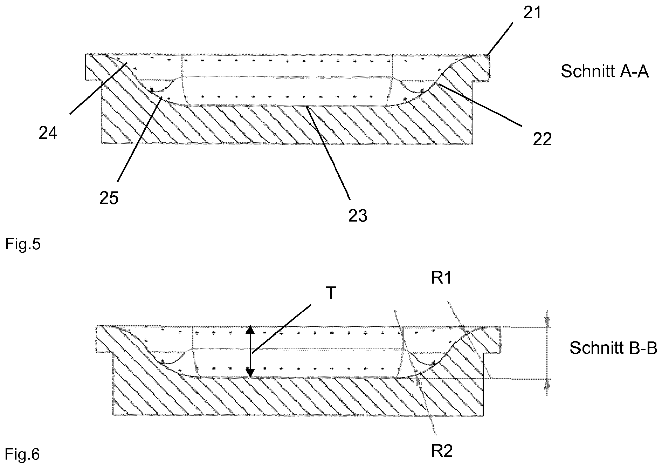

Die Figuren 3 - 6 zeigen das erfindungsgemäße Siegeloberwerkzeug 12, das an seiner einer Oberfolie zugewandten Seite einen Randbereich 21 und eine Einbuchtung 27 aufweist. Der Fachmann versteht, dass das Werkzeug gemäß den Figuren 5 und 6 um 180° gedreht bezogen auf die Gebrauchsstellung dargestellt ist. Im Randbereich wird das Siegeloberwerkzeug auf die Oberfolie 14 gedrückt und dichtet das Siegeloberwerkzeug gegen die Oberfolie 14 ab. In der Ebene des Randbereichs spannt sich in der Regel auch der größte Querschnitt der Einbuchtung 27 auf. An den inneren Umfang des Randbereichs 21 schließt sich der Übergangsbereich 22 der Einbuchtung 27 an. Dieser weist einen ersten konvexen Abschnitt 24 mit einem Krümmungsradius R1 und einen zweiten konkaven Abschnitt 25 mit einem Krümmungsradius R2 auf. In dem vorliegenden Fall erstrecken sich die beiden Abschnitte um den gesamten Umfang der Einbuchtung 27. Dies ist bevorzugt, muss aber nicht sein. Beispielsweise kann/können sich einer oder beide Bereiche 24, 25 nur entlang der längeren Seite des Rechtecks der Einbuchtung erstrecken. Vorzugsweise ist der Krümmungsradius R2 größer als der Krümmungsradius R1. Ausgehend vom inneren Umfang des Übergangsbereichs erstreckt sich der Innenbereich 23. Dieser ist vorzugsweise im Wesentlichen plan und erstreckt sich parallel zu dem Randbereich 21. Die Höhendifferenz zwischen dem Innenbereich 23 und dem Randbereich definiert die Tiefe T der Einbuchtung. Vorzugsweise wird der Krümmungsradius R1 so gestaltet, dass er bei einer größeren Tiefe T auch größer vorgesehen wird.

Wie insbesondere Figur 2 entnommen werden kann, weist das Siegeloberwerkzeug 12, insbesondere der Bereich der Einbuchtung 27 eine Vielzahl von Bohrungen 26 auf. Durch diese Bohrungen 26 kann Luft abgesaugt werden, so dass zwischen dem Siegeloberwerkzeug und der Oberfolie ein Unterdruck entsteht, der die Oberfolie formt und für einen vollflächigen Kontakt zwischen dem Siegeloberwerkzeug und der Oberfolie erzeugt. Durch diese Bohrungen wird der Raum zwischen dem Siegeloberwerkzeug und der Oberfolie dann auch wieder belüftet und/oder mit einem Überdruck versehen.

Insbesondere durch die Gestaltung des Übergangsbereichs kann eine kalte Oberfolie tiefgezogen werden. Die Verformung der Oberfolie ist dabei sehr gleichmäßig und keine Überstreckung oder Reißen der Oberfolie tritt auf. Die Oberfolie legt sich vollständig an die Einbuchtung 27 an und wird dadurch gleichmäßig erwärmt. Dadurch kann auf eine Vorheizung, oder eine Vorformung der Oberfolie auch bei einer Tiefe T der Einbuchtung 27 von mehr als 20 - 30 mm, insbesondere 40 - 55 mm verzichtet werden. Auch muss die Oberfolie seitlich nicht geführt werden. Dadurch kann eine entsprechende Verpackungsmaschine einfacher ausgeführt werden und der gesamte Verpackungsvorgang ist energieeffizient.

### Bezugszeichenliste:

- 1: Verpackungsmaschine
- 2: Formstation, Tiefziehstation
- 3: Oberwerkzeug der Tiefziehstation
- 4: Unterwerkzeug der Tiefziehstation
- 5: Hubtisch, Träger eines Werkzeugs der Siegel-, Tiefziehstation und/oder der Schneideinrichtung
- 6: Verpackungsmulde
- 7: Füllstation
- 8: Folienbahn, Unterfolienbahn
- 9: Hubeinrichtung
- 10: Formen, Recken der Oberfolie, Anlegen an das Produkt und die Verpackungsmulde
- 11: Siegelunterwerkzeug der Siegelstation
- 12: Siegeloberwerkzeug der Siegelstation / Siegelrahmen
- 13: Unterdruck
- 14: Oberfolienbahn, Skinfolie
- 15: Siegelstation
- 16: Verpackungsgut
- 17: Längsschneider
- 18: Querschneider
- 19: Einlaufbereich
- 20: Belüftung Überdruck
- 21: Randbereich
- 22: Übergangsbereich
- 23: Innenbereich
- 24: Erster Abschnitt
- 25: Zweiter Abschnitt
- 26: Gasdurchlass, Ausnehmung, Bohrung
- 27: Einbuchtung
- R1: Radius im ersten Übergangsbereich
- R2: Radius im zweiten Übergangsbereich
- 28: Unterwerkzeug der Siegelstation
- 29: Oberwerkzeug der Siegelstation
- 30: Umgebendes Gehäuse / Klemmwerkzeug der Siegelstation
- 30a: Randbereich / Klemmbereich des umgebenden Gehäuses

## Patentansprüche

1. Siegeloberwerkzeug, das einen Randbereich (21) und eine Einbuchtung (27) aufweist, mit der die Oberfolienbahn geformt wird, wobei die Einbuchtung eine gewisse Tiefe (T) und einen Übergangsbereich (22) und einen Innenbereich (23) aufweist wobei sich der Übergangsbereich (22) zwischen dem Randbereich (21) und dem Innenbereich (23) befindet, **dadurch gekennzeichnet, dass** der Übergangsbereich einen ersten und einen zweiten Abschnitt (24, 25) aufweist, wobei ein Abschnitt (24) konvex und der andere Abschnitt (25) konkav vorgesehen ist, **dadurch gekennzeichnet, dass** das Verhältnis der Tiefe (T) der Einbuchtung (27) zu dem Krümmungsradius (R1) des Abschnitts (24) und auch zu dem Krümmungsradius (R2) des Abschnitts (25) zumindest abschnittsweise ≤ 2,5, bevorzugt ≤ 2 und noch mehr bevorzugt ≤ 1 ist.

2. Siegeloberwerkzeug nach Anspruch 1, **dadurch gekennzeichnet, dass** der Übergangsbereich einen ersten und einen zweiten Abschnitt (24, 25) aufweist wobei ein Abschnitt (24) konvex und der andere Abschnitt (25) konkav vorgesehen ist, deren Krümmungsradius jeweils zumindest abschnittsweise ≥ 8 mm, vorzugsweise ≥ 15 mm und noch mehr bevorzugt ≥ 20 mm und am meisten bevorzugt ≥ 30 mm beträgt.

3. Siegeloberwerkzeug nach einem der voranstehenden Ansprüche, **dadurch gekennzeichnet, dass** die Abschnitte (24, 25) als umlaufend Fläche vorgesehen sind.

4. Siegeloberwerkzeug nach einem der voranstehenden Ansprüche, **dadurch gekennzeichnet, dass** die Radien der beiden Abschnitte ineinander übergehen.

5. Siegeloberwerkzeug nach einem der voranstehenden Ansprüche, **dadurch gekennzeichnet, dass** der konvexe Radius kleiner ist als der konkave.

6. Siegeloberwerkzeug nach einem der voranstehenden Ansprüche, **dadurch gekennzeichnet, dass** es zumindest abschnittsweise Ausnehmungen aufweist und/oder aus einem porösen Material vorgesehen ist.

7. Siegeloberwerkzeug nach einem der voranstehenden Ansprüche, **dadurch gekennzeichnet, dass** die Tiefe der Einbuchtung mehr als 30 mm, vorzugsweise mehr als 40 mm und besonders bevorzugt 50 - 70 mm beträgt.

## Claims

1. Upper sealing tool which has a peripheral region (21) and a recess (27), by way of which the upper film web is formed, wherein the recess has a certain depth (T) and also a transition region (22) and an inner region (23), wherein the transition region (22) is located between the peripheral region (21) and the inner region (23), **characterized in that** the transition region has a first and a second portion (24, 25), wherein one portion (24) is provided in a convex state and the other portion (25) is provided in a concave state, **characterized in that** the ratio of the depth (T) of the recess (27) to the radius of curvature (R1) of the portion (24), and also to the radius of curvature (R2) of the portion (25), is, at least in part, ≤ 2.5, preferably ≤ 2 and even more preferably ≤ 1.

2. Upper sealing tool according to Claim 1, **characterized in that** the transition region has a first and a second portion (24, 25), wherein one portion (24) is provided in a convex state and the other portion (25) is provided in a concave state, the radius of curvature of said portions being in each case, at least in part, ≥ 8 mm, preferably ≥ 15 mm and even more preferably ≥ 20 mm and most preferably ≥ 30 mm.

3. Upper sealing tool according to either of the preceding claims, **characterized in that** the portions (24, 25) are provided in the form of all-round surfaces.

4. Upper sealing tool according to one of the preceding claims, **characterized in that** the radii of the two portions merge one into the other.

5. Upper sealing tool according to one of the preceding claims, **characterized in that** the convex radius is smaller than the concave radius.

6. Upper sealing tool according to one of the preceding claims, **characterized in that**, at least in part, it has apertures and/or is made of a porous material.

7. Upper sealing tool according to one of the preceding claims, **characterized in that** the depth of the recess is more than 30 mm, preferably more than 40 mm and particularly preferably 50 - 70 mm.

## Revendications

1. Outil supérieur de scellage, qui comprend une zone de bord (21) et un renfoncement (27), avec lequel la bande de feuille supérieure est formée, le renfoncement présentant une certaine profondeur (T) et une zone de transition (22) et une zone intérieure (23), la zone de transition (22) se trouvant entre la zone de bord (21) et la zone intérieure (23), **caractérisé en ce que** la zone de transition comprend une première et une deuxième section (24, 25), une section (24) étant prévue sous forme convexe et l'autre section (25) sous forme concave, **caractérisé en ce que** le rapport de la profondeur (T) du renfoncement (27) au rayon de courbure (R1) de la section (24) et également au rayon de courbure (R2) de la section (25) est au moins en sections ≤ 2,5, de préférence ≤ 2 et de manière encore davantage préférée ≤ 1.

2. Outil supérieur de scellage selon la revendication 1, **caractérisé en ce que** la zone de transition comprend une première et une deuxième section (24, 25), une section (24) étant prévue sous forme convexe et l'autre section (25) sous forme concave, dont le rayon de courbure est à chaque fois au moins en sections ≥ 8 mm, de préférence ≥ 15 mm et de manière encore davantage préférée ≥ 20 mm et de manière préférée entre toutes ≥ 30 mm.

3. Outil supérieur de scellage selon l'une quelconque des revendications précédentes, **caractérisé en ce que** les sections (24, 25) sont prévues sous la forme d'une surface périphérique.

4. Outil supérieur de scellage selon l'une quelconque des revendications précédentes, **caractérisé en ce que** les rayons des deux sections se raccordent l'un à l'autre.

5. Outil supérieur de scellage selon l'une quelconque des revendications précédentes, **caractérisé en ce que** le rayon convexe est inférieur au concave.

6. Outil supérieur de scellage selon l'une quelconque des revendications précédentes, **caractérisé en ce qu'**il comprend au moins en sections des évidements et/ou est prévu en un matériau poreux.

7. Outil supérieur de scellage selon l'une quelconque des revendications précédentes, **caractérisé en ce que** la profondeur du renfoncement est de plus de 30 mm, de préférence de plus de 40 mm et de manière particulièrement préférée de 50 à 70 mm.
